# EUROPEAN PATENT APPLICATION

(11) **EP 4 725 734 A1**
(43) Date of publication of application: **15.04.2026**
(21) Application number: 25202948.3
(22) Date of filing: 18.09.2025
(51) Int. Cl.: B60K 6/26, B60K 6/40, B60K 6/485

(54) **HYBRIDIZATION ASSEMBLY FOR AN ENDOTHERMIC ENGINE AND ENDOTHERMIC ENGINE INCLUDING THE ASSEMBLY**

(30) Priority: 08.10.2024 IT 202400022347
(71) Applicant: FPT Industrial S.p.A., 10156 Torino (IT)
(72) Inventor: DEL GIUDICE, Davide, 9320 Arbon (IT); PIERRO, Enzo, 10156 Torino (IT); CAVAZZONI, Andrea, 10091 Alpignano (TO) (IT)
(74) Representative: Fiume, Orazio

(57) **Abstract**

Hybridization assembly for an internal combustion engine, comprising a flywheel (FW), in operating conditions attached to a PTO of the internal combustion engine, a flexplate (FP) comprising a first face associated with said flywheel and a second face, opposite to the first one, associated directly with the rotor (R) of an electric motor (R, K2), supported in rotation by a related stator (K2), a flange (F) for connection to a vehicle transmission, in which the connection flange is connected exclusively to the rotor.

## Description

### Field of the invention

The present invention relates to the field of hybrid propulsion systems for heavy-duty road and off-road vehicles, including agricultural and construction vehicles, and in particular to the field of hybrid vehicles in which a low voltage electric motor is operatively connected to the rear PTO of the combustion engine at a point upstream of a vehicle transmission.

### State of the art

In hybrid propulsion systems, a P1 is often defined as a system in which the electric motor is directly connected to the rear PTO of the combustion engine. Therefore, the combustion engine and the electric motor cannot be separated from each other, and the remaining transmission is responsible for rotating the vehicle wheels.

The rear PTO is therefore designed to rotate the transmission and therefore the vehicle wheels. Conversely, the front PTO is designed to rotate the auxiliary belt and therefore, for example, the air conditioning compressor, the alternator, etc.

Hybridizations can be low-voltage or high-voltage.

Generally, electric motor supply voltages below 60V are considered low-voltage, while high-voltage hybridizations involve supply voltages in the range of 350-400V, up to 1500V.

Evidently, in the context of low-voltage hybridization, electric motors have a rotor with a lower mass than motors designed to operate at high voltage and therefore offer low inertia.

High-voltage electric motors typically have high rotor inertia and higher power output than low-voltage motors.

Coupling a combustion engine to an electric motor requires certain precautions, as there is a risk of transmitting axial and torsional vibrations, damaging the electric motor.

The terms combustion engine and internal combustion engine are completely equivalent.

Another problem lies in the fact that both the electric motor rotor and the combustion engine crankshaft must be connected to the flywheel and the flange that connects to the remaining transmission.

The mutual connection must be such as not to excessively stiffen the assembly, as this would lead to rapid deterioration.

Sometimes, a splined shaft is used to connect the flexplate and the rotor of the electric machine, as the splined axis simplifies component assembly.

Another issue is the compactness of the hybridization assembly.

Unless specifically excluded in the detailed description below, the information in this chapter is to be considered an integral part of the detailed description.

### Summary of the invention

The purpose of this invention is to propose a particularly compact and robust hybridization unit.

According to the present invention, the hybridization unit comprises a flywheel, a flexplate, an electric motor, and a flange for connecting to a vehicle transmission. The basic idea is to attach the flywheel to the rear PTO of the internal combustion engine. The rotor of the electric motor is previously fixed to the flexplate to form a single body, and the flange for connecting to the vehicle transmission is supported exclusively by the electric motor rotor. Preferably, the electric motor rotor is attached to the internal combustion engine flywheel exclusively via the flexplate.

The implementation of a low-voltage electric motor allows the flexplate to suppress only axial and bending vibrations, as the low inertia of the rotor, resulting from the intrinsic characteristics of a low-voltage electric motor, does not cause excessive loads due to torsional vibrations on the rotating elements downstream of the flywheel.

Therefore, this configuration is synergistic with the type of electric motor implemented, i.e., low voltage and therefore low inertia.

Advantageously, eliminating the splined shaft results in lower operating noise and increased durability of the hybridization assembly.

Eliminating the splined shaft with the solution described above creates an additional centering problem.

The hybridization assembly, according to a preferred aspect of the present invention, includes a lost centering sleeve. This sleeve has an axial extension that identifies a first end and a second end opposite the first end.

The first end identifies a first centering interface with the rotor, and the second end identifies a second centering interface with the flywheel.

According to a preferred aspect of the invention, the centering sleeve is arranged to fit into a space defined partially by the flywheel and partially by the rotor of the electric motor. The centering sleeve has an axial extension smaller than the axial dimensions of the aforementioned space, therefore, it is free to slide axially at least during one assembly phase of the hybridization unit.

In particular, the centering sleeve includes a central threaded hole at the first end, and the connecting flange includes a central hole that passes through a relative fixing foot, through which a screw can be inserted.

When the foot of the connecting flange is inserted into the electric motor rotor, the screw engages the center hole of the centering sleeve, forcing it to retract toward the foot of the connecting flange.

The centering sleeve has such an axial extension that, when fully retracted, it is completely disconnected from the portion of the space defined by the flywheel. This ensures that the torque passes exclusively through the flywheel-flexplate-rotor assembly of the electric motor, ensuring an adequate degree of elasticity of the assembly. This elasticity is necessary to absorb the vibrations generated by the internal combustion engine and not dampened by the flywheel and flexplate.

It is therefore clear that under operating conditions, i.e., when the assembly is assembled with the internal combustion engine, the centering sleeve serves the sole purpose of locking the foot of the connecting flange to the rotor without any further structural function.

From an assembly perspective, the centering sleeve is pre-assembled onto the electric machine using the screw passing through the foot of the flange. Preferably, a spring is placed between the sleeve and the flange base to keep the centering sleeve relaxed and ready to act as a centering element when the assembly is brought close to the flywheel. When the assembly is brought close to the engine's flywheel, the sleeve is in the relaxed position and engages the seat on the engine's flywheel. Centering the rotor directly with the engine's flywheel eliminates all possible play.

Once centered, the electric motor is secured to the flywheel casing using the perimeter screws, and the flexplate is secured to the flywheel itself using a series of perimeter screws.

At this point, the sleeve is released from the seat in the flywheel by tightening the central screw passing through the flange base. This ensures that the connection between the rotor and flywheel is exclusively via the flexplate, which can function properly.

The assembly preferably includes a closing cover, on the transmission side, to be secured to the engine's flywheel casing.

The transmission is engaged with the rotor of the electric machine via the adapter flange that supports the screw that allows the centering sleeve to be released. This creates a closed casing with the transmission, and for this reason, the centering sleeve is defined as "lost" as it remains inside this casing, performing the sole function of limiting the axial play of the transmission flange with respect to the rotor of the electric machine. When possible, the sequence of the previous operations secures the electric motor stator to the closing casing, forming a closed casing.

It is clear from the sequence of the operations described above that the torque generated by the internal combustion engine is transmitted to the connecting flange exclusively through the rotor.

Therefore, the torque path between the rear PTO and the connecting flange comprises, in sequence: flywheel, flexplate, rotor.

Therefore, the hybridization unit of the present invention comprises a flywheel to which a flexplate is attached, which in turn is attached to the rotor of the electric motor, to which the connecting flange is attached.

The dependent claims describe preferred variants of the invention, forming an integral part of this specification.

### Brief description of the figures

Further purposes and advantages of the present invention will become clear from the following detailed description of an embodiment thereof (and variations thereof) and the accompanying drawings, provided purely for explanatory and non-limiting purposes, in which:
Figure 1 shows an axial sectional view of a hybridization assembly according to the present invention with separate parts;
Figure 2 shows a sectional view corresponding to that of Figure 1 during assembly of the assembly, while Figure 2a shows an enlargement of a portion of Figure 2;
Figure 3 schematically shows the connection of the components during the assembly phase shown in Figure 2;
Figures 4, 4a, and 5 correspond to the same views as Figures 2, 2a, and 3 in the fully assembled state of the hybridization assembly;
Figure 5a shows a preferred embodiment of the invention.

The plan views are ground in the plane to facilitate understanding of the diagrams. In other words, the rays described above are made coplanar.

The same reference numbers and letters in the figures identify the same elements, components, or functions.

It should also be noted that the terms "first," "second," "third," "upper," "lower," and the like may be used here to distinguish various elements. These terms do not imply a spatial, sequential, or hierarchical order for the modified elements unless specifically indicated or inferred from the text.

The elements and features illustrated in the various preferred embodiments, including the drawings, may be combined without departing from the scope of this application as described below.

### Detailed description of preferred embodiments

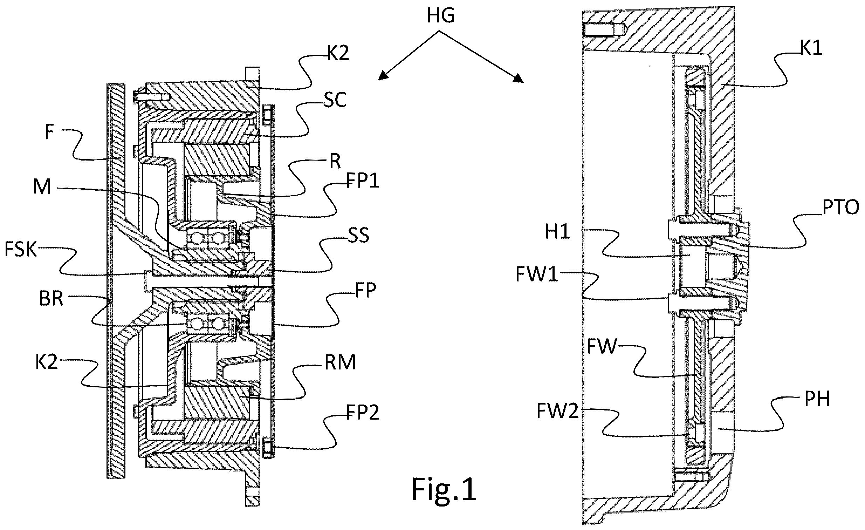

According to the present invention, the HG hybridization unit comprises, from right to left in Figures 1, 2, and 4, a cover K1 designed to be fixed to or integral with the crankcase of a combustion engine E shown in Diagrams 3 and 5, a flywheel FW, a flexplate FP, an electric motor R, K2, and a flange FL for connection to a vehicle transmission (not shown).

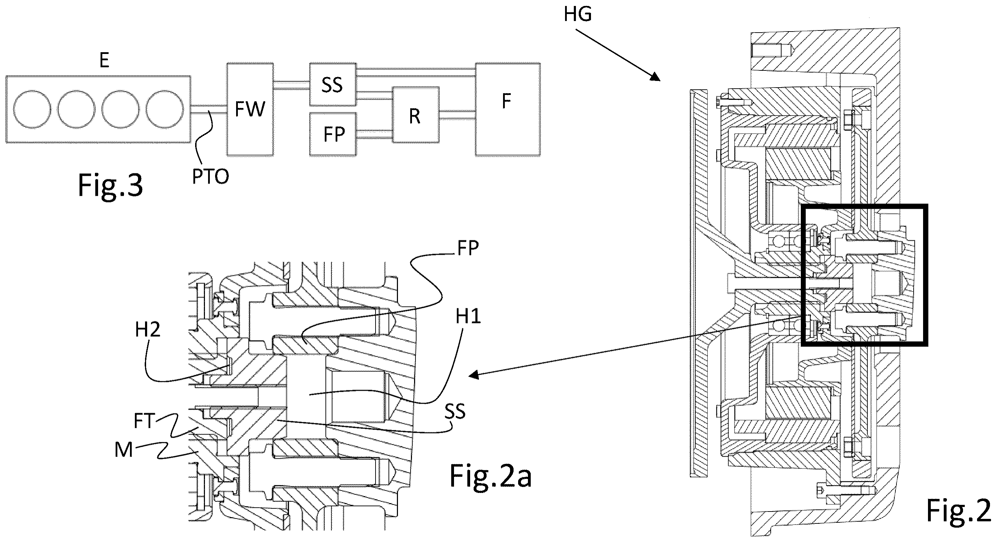

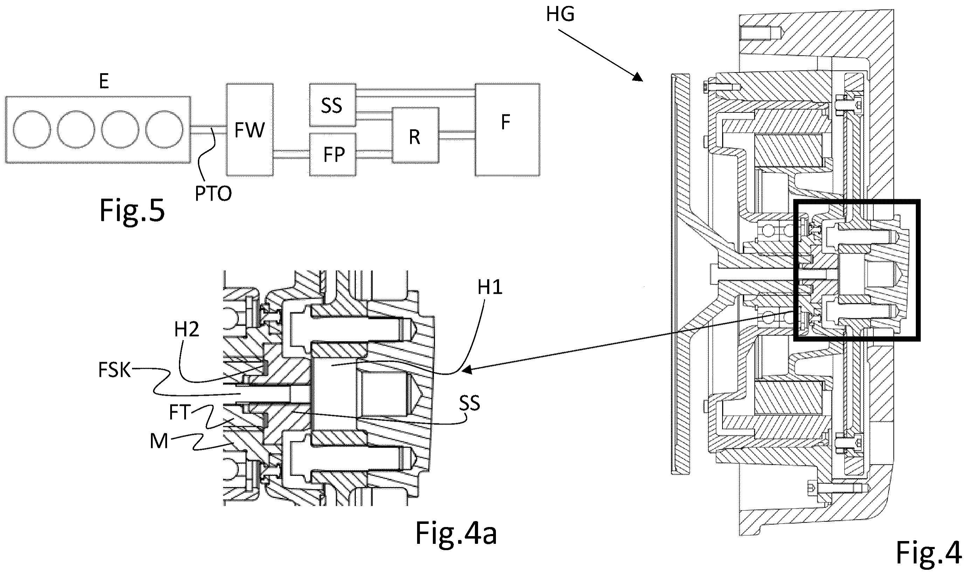

The stator K2 of the electric motor is bell-shaped without a base, as it is intended to complete, with the cover K1, a casing arranged to accommodate the HG hybridization unit, see Figures 2 and 4.

The flywheel is designed to be fixed to the rear PTO of the combustion engine, indicated by the symbol PTO.

The flywheel attachment operation is a preliminary step for assembling the HG assembly to the internal combustion engine E.

At the same time, the electric motor is assembled with the sleeve M, integral with the rotor R, which is rotated by the stator K1 via at least one bearing BR.

The flexplate FP is attached to the rotor R at the attachment points FP1, approximately annular with respect to the sleeve M, which rotates with the rotor R.

Therefore, the flexplate has a first face intended to be attached to the rotor and a second face opposite to the first, intended to be attached to the flywheel.

Preferably, the peripheral portion of the flexplate is attached to the flywheel, while a central area is attached to the rotor.

It is worth noting that, structurally, the HG assembly is axially symmetrical along the axis identified by the rear PTO.

A centering operation is performed to center the rotor of the electric machine and the flywheel. The flexplate, previously attached to the rotor of the electric machine, can be attached to the flywheel while the rotor is centered with the flywheel thanks to the centering sleeve.

The centering operation is performed using the centering sleeve SS. This is inserted into the central cavity H1 created in the flywheel by placing the hybridization unit next to it while the sleeve protrudes from the rotor. Connecting screws are then inserted through the PH opening in the K1 casing. To connect the flywheel to the flexplate at multiple points, the flexplate is rotated accordingly, thus forcing the flywheel to rotate and aligning the mutual connection points between the flywheel and the flexplate, FW2 and FP2, respectively, with the PH opening in the K1 casing through which a connecting screw can be inserted.

The centering sleeve has an axial extension that identifies a first end and a second end opposite the first.

The first end defines a first centering interface with the central cavity H1 of the flywheel, and the second end defines a second centering interface with the rotor. According to a preferred aspect of the invention, the centering sleeve is arranged to fit into a space defined partially by the central cavity H2 in the rotor and partially by the central cavity H1 of the flywheel. The centering sleeve has an axial extension smaller than the axial dimensions of the aforementioned space H1 + H2, therefore it is free to slide axially at least during one assembly phase of the hybridization unit.

Specifically, the centering sleeve includes a central threaded hole at the second end, and the connecting flange includes a central hole that passes through the relative fastening foot FT, through which an FSK screw can be inserted.

When the foot of the connecting flange is inserted into the sleeve of the electric motor rotor, insertion of the screw allows it to intercept the central hole of the centering sleeve SS, forcing it to retract and approach the foot of the connecting flange.

The centering sleeve has an axial extension such that when fully retracted, in the contact position in seat H2 as shown in detail in Figure 4a, it is completely disconnected from the cavity H1 defined by the flywheel. This ensures that the torque passes exclusively through the flywheel-flexplate-rotor assembly of the electric motor, ensuring an adequate degree of elasticity of the assembly.

It is therefore clear that under operating conditions, the centering sleeve has the sole purpose of securing the foot FT of the connecting flange to the rotor without any further structural function.

According to a preferred aspect of the invention, a spring SP is fitted to the FSK screw, interposed between the foot of the flange and the centering sleeve, which has the task of pushing the centering sleeve forward.

This spring is particularly useful because, when the engine/flexplate assembly is brought close to the flywheel, the spring pushes the centering sleeve out of seat H2, allowing it to be inserted into seat H1, performing the aforementioned centering function.

Preferably, the rotating sleeve M of the rotor R is internally grooved and the flange foot FT is externally grooved in a complementary manner to the sleeve. Therefore, the centering sleeve SS only prevents the flange foot FT from disengaging from the sleeve M.

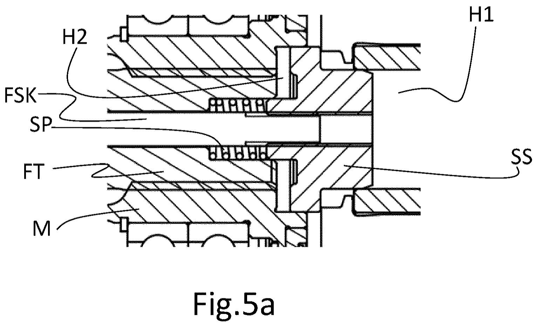

Figures 3 and 5 show the connection between the PTO of the internal combustion engine and flange F. While in Figure 5, when the HG assembly is fully assembled and connected to the PTO, the connection is exclusively between the flywheel and the flexplate. Differently, in Figure 3, when the engine/flexplate assembly is brought close to the flywheel, the connection is made via the centering sleeve SS.

It is therefore important to note that the foot FT of the connecting flange is supported exclusively by the rotor R of the electric motor.

It should be noted that the assembly shown is extremely compact yet robust and simple to assemble.

The assembly is completed by securing the electric motor's stator K2 to the fixed casing K1 with the engine base and reinserting the centering sleeve SS.

The assembly sequence is described below:
- force the centering sleeve SS to protrude from the rotor of the electric machine;
- move the hybridization assembly so as to insert the centering sleeve into the flywheel's central seat;
- connect the peripheral part of the flexplate to the flywheel using screws inserted from the rear of the K1 casing;
- connect the electric motor's stator K2 to the K1 casing using perimeter screws;
- tighten the FSK screw so as to reinsert the centering sleeve, disengaging the flywheel's central seat.

Implementation variations to the non-limiting example described are possible, without departing from the scope of protection of the present invention, including all embodiments equivalent to the claims for a person skilled in the art.

From the above description, a person skilled in the art is able to implement the invention without introducing further construction details.

## Claims

1. Hybridization assembly for an internal combustion engine, comprising a flywheel (FW), in operating conditions, attached to a rear PTO of the internal combustion engine, a flexplate (FP) comprising a first face directly associated with said flywheel and a second face, opposite to the first one, directly associated with the rotor (R) of an electric motor (R, K2), supported in rotation by a related stator (K2), a flange (F) for connection to a vehicle transmission, wherein the connection flange is connected solely and exclusively to the rotor.

2. Assembly according to claim 1, further comprising a compartment (H1, H2) defined by a first central cavity (H1) of the flywheel and a second central cavity (H2) of the rotor, axially adjacent to said first central cavity and in which, in said compartment, a centering sleeve (SS) is arranged.

3. Assembly according to claim 2, wherein said centering sleeve, in operating conditions, is completely external to the first central cavity (H1) of the flywheel.

4. Assembly according to claim 3, wherein the centering sleeve is kept external to the first central cavity (H1), in operating conditions, by an axial screw (FSK) passing through said connecting flange.

5. Assembly according to claim 3, further comprising a spring (SP) interposed between the connecting flange and the centering sleeve, such that, in the assembled condition, the centering sleeve is kept protruding from the second central cavity (H2).

6. Assembly according to one of claims 3 - 5, wherein the centering sleeve has an axial extension identifying a first end and a second end opposite the first, wherein the first end defines a coupling interface with said first central cavity (H1) of the flywheel and said second end defines a second coupling interface with the second central cavity (H2) of the rotor.

7. Assembly according to claim 5, wherein, in assembly conditions, the centering sleeve is at least partially inserted into said first central cavity (H1) of the flywheel to allow centering between the flywheel and the flexplate previously fixed to the rotor of the electric motor.

8. Assembly according to any of the preceding claims, further comprising a casing (K1) made of one piece or suitable for being fixed to a crankcase of the internal combustion engine (E), cooperating with the stator (K2) of the electric motor to define a closed casing enclosing said flywheel, flexplate and rotor.

9. Group according to any of the preceding claims 1 - 8, wherein said electric motor is sized to have a supply voltage lower than 60V.

10. A method of assembling an assembly according to any of the preceding claims 2-9, comprising the following steps in sequence:
- Attaching the flywheel to a rear PTO of a combustion engine,
- Attaching the flexplate to the rotor of the electric motor, defining the hybridization assembly,
- Placing the hybridization assembly against the flywheel by inserting the centering sleeve into the first central cavity (H1),
- Attaching the flexplate to the flywheel.

11. A method according to claim 10, wherein the hybridization assembly is pre-assembled with the flange inserted into the rotor and the centering sleeve operatively secured to the flange by means of the central screw.

12. Propulsion system for an industrial or commercial vehicle comprising a hybridised internal combustion engine (E) comprising a rear PTO, a flywheel (FW) directly connected to the PTO and a hybridisation unit according to any of the previous claims 1 - 9, wherein the flexplate (FP) of the hybridisation unit has a first face directly associated with the flywheel.
